# EUROPEAN PATENT APPLICATION

(11) **EP 1 229 413 A1**
(43) Date of publication of application: **07.08.2002**
(21) Application number: 02001613.5
(22) Date of filing: 23.01.2002
(51) Int. Cl.: G05B 19/4093

(54) **Multipurpose processing program and nc processing machine using the same**

(30) Priority: 01.02.2001 JP 2001025017
(71) Applicant: Murata Kikai Kabushiki Kaisha, Minami-ku, Kyoto-shi, Kyoto 601 (JP)
(72) Inventor: Tamamura, Hitoshi, Mitake-cho, Kani-gun, Gifu (JP)
(74) Representative: Liedl, Christine

(57) **Abstract**

The object of the present invention is to provide the multipurpose processing program independent of the model of the processing machine, and the NC processing machine using the multipurpose processing program. The multipurpose processing program 1 is a program with the processing shape data 4 arranged in the processing order of each processing portions (A∼C). The processing shape data 4 is a data including the processing standard position (P) of the individual processing portions (A∼C) which are processed on the work (W), and the processing shape and size with such processing standard position (P) as the standard. The processing machine 3 uses the tools of which the processing shape and size are determined, and for example, is a work sheet processing machine of a punch press or the like. The control device 5 comprises the processing program converting means 8 for converting the multipurpose processing program 1 into the actual processing program 10, and the machine control means 9 for controlling the processing machine 3 by carrying out the actual processing program 10 (Fig. 1).

## Description

### Field of the Invention

The present invention relates to a multipurpose processing program for controlling a processing machine using tools of which the processing shape and size are designated, and to a NC processing machine using the same, which is a work sheet processing machine of a punch press or the like and other processing machines.

### Background of the Invention

The conventional processing program for controlling the work sheet processing machine of the punch press or the like numerically is written with a tool code (T code) according to the punch tool number or the like, and a position fixing coordinates of the processing position. The T code is a peculiar characteristic for the processing machine according to each model or the individual processing machine.

As in the manner stated above, since there are only the T code and the position fixing coordinates, when the same processing program is to be used for the processing machine of the other model, when the T code is not evident, the processing cannot be carried out. Moreover, since the processing program is written with the T code assumed, when processing with other processing machine, processing cannot be carried out unless there is the same punch tool.

The object of the present invention is to provide a multipurpose processing program independent of the model of the processing machine and the NC processing machine using the multipurpose processing program.

### Summary of the Invention

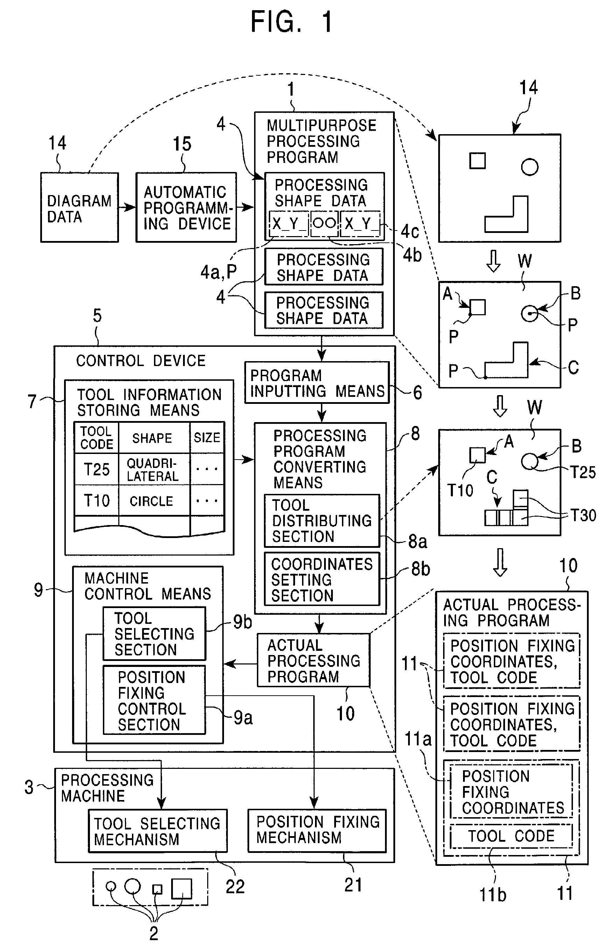

The present invention will now be described in reference to Figure 1 which corresponds to an embodiment.

The multipurpose processing program 1 is a processing program for controlling the processing machine 3 using the tool of which the processing shape and size are designated. Moreover, in the multipurpose processing program 1, the processing standard position (P) in each processing portions (A∼ C) to be processed on the work (W), the processing shape data 4 which is a data including the shape and size of the processing portions (A∼C) to be processed with the processing standard position (P) as the standard, are arranged in the processing order of each processing portions (A∼C).

As in the manner stated above, since the processing standard position (P) and the shape and side of the processing portions (A∼C) to be processed with the processing standard position (P) as the standard are written in the multipurpose processing program 1, it can be used independent of the model of the processing machine 3. Moreover, the processing data 4 comprised of the shape and size of the processing portions (A∼C) and the data of the standard position, which is not a graphic data written with these data only, is arranged in the processing order of each processing portions (A∼C). Therefore, the multipurpose processing program 1 can be easily converted into a command for controlling the operation of the processing machine 3, the multipurpose processing program 1 can be converted into the operational command of the processing machine 3 by each written processing shape data 4, and the operation of the processing machine 3 can be controlled.

The NC processing machine using the multipurpose program of the present invention comprises a position fixing mechanism 21 for fixing the position of the work (W) relative to the tool 2, and a tool selecting mechanism 22 for selecting the desired tool 2 from a plurality of tools 2. Moreover, it is the NC processing machine using aforementioned multipurpose processing program 1 of the present invention and comprises a program inputting means 6 for inputting the multipurpose processing program 1, a tool information storing means 7 for storing by relating the data of the shape and size to be processed by each tool 2 provided in the processing machine 3 to the tool code of the tool 2, a processing program converting means 8 for converting the input multipurpose processing program 1 into an actual processing program 10 corresponding to the model of the processing machine 3, and a machine control means 9 for controlling a position fixing mechanism 21 and a tool selecting mechanism 22 of the processing machine 3 following the converted actual processing program 8. Based on the stored data of the tool information storing means 7, the processing program converting means 8 distributes the tool 2 in accordance with each processing shape data 4 in the multipurpose processing program 1, and includes a process for designating the tool code in the actual processing program 10.

According to such structure of the NC processing machine, the processing program converting means 8 converts the input multipurpose processing program 1 into the actual processing program 10 corresponding to the model of the processing machine 3. At the time being, based on the stored data of the tool information storing means 7, the tool 2 is distributed to each processing shape data 4 in the multipurpose processing program 1 and the tool code in the actual processing program 10 is designated. The machine control means 9 controls the position fixing mechanism 21 and the tool selecting mechanism 22 of the processing machine 3 by the actual processing program 10 converted in such manner. As in the manner stated above, by using the multipurpose processing program 1 of the present invention, the multipurpose processing program 1 can be converted automatically into the actual processing program 10 corresponding to a specific processing machine 3, and such processing machine 3 can be controlled. The machine control means 9 controls by the actual processing program 10 converted in such manner, and the general NC device can be utilized.

Therefore, by adding the processing program converting mechanism 8 or the like to the general NC device, the NC processing machine using the multipurpose processing program 1 of the present invention can be constructed. The conversion to the actual processing program 10 by the processing program converting means 8 and the control by the machine control means 9 can be carried out by converting the multipurpose processing program 1 from the head part accordingly. In the multipurpose processing program 1, since the processing shape data 4 is arranged in the processing order of each processing portions (A ∼C), even by executing while converting each processing shape data 4 accordingly, the processing can be carried out in the appropriate processing order. In the work sheet processing or the like, the processing order of each processing portions (A∼C) is an especially important aspect. Therefore, when the processing order changes, problems are prone to occur in that the work sheet feeding mechanism or the like fail to hold the work sheets, or the rigidity in the work sheet in the process of processing becomes insufficient. However, according to the present invention, since the processing order set in the multipurpose processing program 1 in the manner stated above is maintained, the changes in the processing order can be made without trouble.

Concerning the distribution of the tool 2 by the processing program converting means 8, when the tool 2 of the shape and size corresponding to the processing portions (A∼C) is present, such tool 2 can be utilized. However, when the measurement of the processing portions (A∼C) is large or when the shape of the tool 2 is complicated and the corresponding tool 2 is absent, the same tool 2 can be made to operate variously or the tools 2 of a plurality of types can be used in a combination. By setting the rule of the tool selection in advance to the processing program converting means 8, even in the case the corresponding tool is not present, the process of the tool selection can be automated.

According to the NC processing machine using the multipurpose processing program 1 of the present invention, the processing program converting means 8 can be made to form the actual processing program 10 by converting the processing standard position (P) in the multipurpose processing program 1 into the position fixing coordinates by the position fixing mechanism 21 of the processing machine 3.

For example, according to the multipurpose processing program 1, when the corner section of the outer periphery of the processing portions (A∼C) are set to the processing standard position (P), the actual processing program 10 can be made so that the center of the tool 2 is to be the position fixing coordinates of the processing machine 3. In the processing machine 3 of which the tool 2 elevates or descends at a fixed position, as in the punch press or the like, the position fixing coordinates of the work transferring is prone to be set to the tool center, and the appropriate actual processing program corresponding to the structure of such processing machine 3 can be made.

### Brief Description of the Drawings

Figure 1 is a block diagram showing the outlined structure of the multipurpose processing program and the NC processing machine using the same according to an embodiment of the present invention.
Figure 2 is a plan view showing an example of the processing machine of the same.
Figure 3 is a view useful for explaining an example for converting the graphic data into the command of the processing shape data and the processing program.
Figure 4 is a view useful for explaining each example of tool distribution.

### Detailed Description of the Invention

An embodiment of the present invention will now be described in reference to the accompanying drawings.

A multipurpose processing program 1 is a processing program for controlling a processing machine 3 using a tool 2 of which the processing size and shape are designated. Moreover, the multipurpose processing program 1 is a program wherein a processing standard position (P) in the individual processing portions (A∼C) to be processed on a work (W) and a processing shape data 4 including a shape data 4b and a size data 4c of the processing portions (A∼C) to be processed with the processing standard position (P) as the standard are arranged in the processing order of each processing portions (A∼C). The multipurpose processing program 1 is carried out by a control device 5. A NC processing machine using the multipurpose processing program is comprised of the control device 5 and the processing machine 3. The processing machine 3 comprises a position fixing mechanism 21 for fixing the position of the desired portion of the work (W) to a designated processing position, and a tool selecting mechanism 22 for selecting the desired tool from a plurality of tools 2.

The control device 5 is constructed by a computer, and comprises a program inputting means 6, a tool information storing means 7, a processing program converting means 8, and a machine control means 9.

The program inputting means 6 is a means for inputting the multipurpose processing program 1, and inputs the multipurpose processing program 1 by the storing medium or the communication network, keyboard inputting or the like. The program inputting means 6 can be used also as a program memory for storing the multipurpose processing program 1.

The tool information storing means 7 is a means storing the data of the shape and the size to be processed by each tool 2 provided in the processing machine 3, related to a tool code of the tool 2. The shape of the tool 2 is classified by the code, the name or the like showing the types of a circle, a quadrilateral shape, etc...

The processing program converting means 8 is a means for converting the input multipurpose processing program 1 into an actual processing program 10 corresponding to the model of the processing machine 3. The actual processing program 10 is a processing program of the general format written by NC code or the like, and is also a program with a processing command 11 including position fixing coordinates 11a and the tool code 11b written accordingly. The processing program converting means 8 carries out the distribution of the tool 2 to each processing shape data 4 of the multipurpose processing program 1, based on the stored data of the tool information storing means 7, and includes a process for designating the tool code 11b in the actual processing program 10 based on the distributed result, and a process for converting the processing standard position (P) in the multipurpose processing program 1 into the position fixing coordinates 11a of the position fixing mechanism 21 of the processing machine 3 according to the designated rule. In the processing program converting means 8, the process for designating the tool code 11b is carried out by a tool distributing section 8a, and the process for converting into the position fixing coordinates 11a is carried out by a coordinates setting section 8b.

The machine control means 9 is a means for controlling the position fixing mechanism 21 and the tool selecting mechanism 22 of the processing machine 3 in accordance with the actual processing program 10 converted by the processing program converting means 8. A position fixing control section 9a controls the position fixing mechanism 21 and a tool selecting section 9b controls the tool selecting mechanism 22. The machine control means 9 includes a numeric control function and a function as a programmable controller.

The formation of the multipurpose processing program 1 is carried out by an automatic programming device 15 by using a graphic data 14. The graphic data 14 is formed by CAD or the like. The automatic programming device 15 modifies the graphic data 14 into a data capable of being defined as a processing shape data 14, and also carries out a process to arrange the processing shape data 4 of each processing portions (A∼C) in the processing order. The automatic programming device 15 uses the graphic data 14 prepared in advance and can also make them ultipurpose processing program 1 directly without using such graphic data 14.

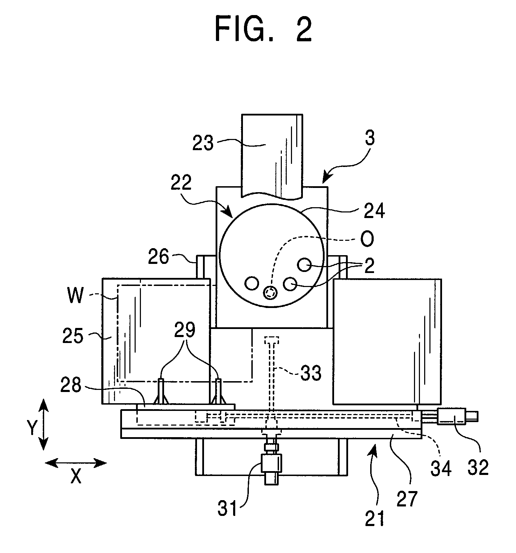

Figure 2 shows a specific example of the processing machine 3. The processing machine 3 is a work sheet processing machine and comprises a punch press. The processing machine 3 loads a plurality of tools 2 on a tool supporting body 24 provided to a frame 23, and the position of any tool 2 is to be fixed at the designated processing position (0) by the operation of the tool supporting body 24. The tool supporting body 24 is comprised of a pair of an upper turret and a lower turret which are selected and driven in synchronism, and as the tool 2, the punch tool is provided in the upper turret and the die tool is provided in the lower turret respectively. The tool selecting mechanism 22 is constructed by the tool supporting body 24 and the driving mechanism (not shown in the drawings) for rotating the tool supporting body 24.

A ram elevating or descending driving device (not shown in the drawings) for elevating or descending the tool 2 on the punch side supported by the tool supporting body 24 is provided at the processing position (0).

The position fixing mechanism 21 is a mechanism for advancing or receding the work (W) comprised of work sheet on a table 25, in the front-back direction (Y axis direction) and the left-right direction (X axis direction) to the processing position (0). The position fixing mechanism 21 comprises a carriage 27 capable of transferring in the front-back direction on a rail 26 of the table 25, a cross slide 28 loaded capable of transferring in the left-right direction on the carriage 27, and a work holder 29 holding the edge portion of the work (W) attached to the cross slide 28. A servomotor 31 drives the carriage 27 to advance and recede via a ball screw mechanism 33. Moreover, a servomotor 32 drives the cross slide 28 to advance and recede via a ball screw mechanism 34.

Next, the process from the formation of the multipurpose processing program 1 to the execution of the multipurpose processing program 1 by the control device 5 will be described in accordance with the example of the shape of the processing portion.

As shown in the right part of Figure 1, a case in which a plurality of processing portions (A∼C) are to be processed on the work (W) comprised ofa work sheet, is to be proposed. In such case, first, the graphic data 14 of each processing portions (A∼C) is formed by CAD devices or the like. The graphic data 14 is to be input into the automatic programming device 14 and forms the multipurpose processing program 1 automatically.

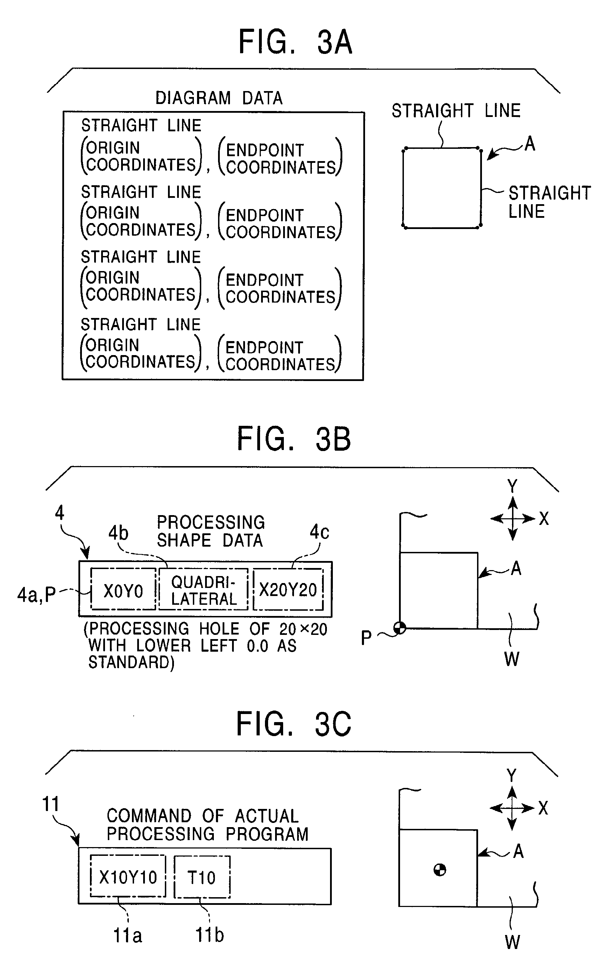

As shown in Figure 3A, the graphic data 14 by CAD or the like is formed with a group of line data shown with the type of line and the origin coordinates and the endpoint coordinates of each line segment. Therefore, there are cases in which the order of the line data is unmovable and the line which is required to be continuing is not continuing exactly.

The multipurpose processing program 1 is a group of data of which the processing shape data 4 of each processing portions (A∼C) are arranged in the processing order. The processing shape data 4 is a data showing the processing standard position (P), the shape data 4b and the size data 4c of the processing portions (A∼C) which are to be processed with the processing standard position (P) as the standard. The processing standard position (P) is written as the coordinates data 4a. For example, when it is a quadrilateral of square or the like, the processing standard position (P) is to be at the designated corner (for example, the corner of the lower left in the figure), and when it is a circle, the processing standard position (P) is to be the center of the circle.

Figure 3B is an example of the processing shape data 4 of a quadrilateral shape, and are shown with the coordinates data 4a of the processing standard position (P) comprised of "X0Y0", the shape data 4b comprised of letter, code or the like which shows the quadrilateral shape, and the size data 4c indicating the length of each side in "X20Y20", arranged into an indication of "X0Y0 quadrilateral X20Y20". When it is a quadrilateral shape, the processing standard position (P) is determined to be the corner of the lower left in advance. In other words, the processing shape data 4 shown in this figure shows the processing hole of 20x20mm with the lower left (0, 0) as the standard.

When it is a circle, the center of the circle is to be the processing standard position, and the processing shape data 4 is to be shown with letter or code indicating the circle and the size data indicating the radius.

Such processing shape data 4 are converted into the actual processing program 10 corresponding to the model of the processing machine by the processing program converting means 8. The processing shape data 4 of one of the data of the multipurpose processing program 1 is converted into, for example, one or a plurality of processing commands 11 in the actual processing program 10. At the time being, the processing program converting means 8 refers to the shape and size data of each tool stored in the tool information storing means 7, distributes the tool 2 corresponding to the processing shape data 4, and designates the tool code 11b in the processing command 11 of the actual processing program 10. Moreover, the processing program converting means 8 converts the processing standard position (P) of the processing shape data 4 in the multipurpose processing program 1 into the position fixing coordinates by the position fixing mechanism 21 of the processing machine 3. In the case of the processing machine 3 of the example shown in Figure 2, the processing standard position (P) of the processing shape data 4 in the multipurpose processing program 1 is converted into the data of the coordinates position for fixing the position of the work (W) to the processing position (0).

Figure 3C shows an example of the processing shape data 4 shown in Figure 3B converted into a processing command 11 of the actual processing program 10. The processing command 11 is comprised of a selecting command of the quadrilateral tool 2 of 20x20mm shown with the tool code of "T10", and a data 11a of the position fixing coordinates "X10Y10" relating to the center of the tool 2.

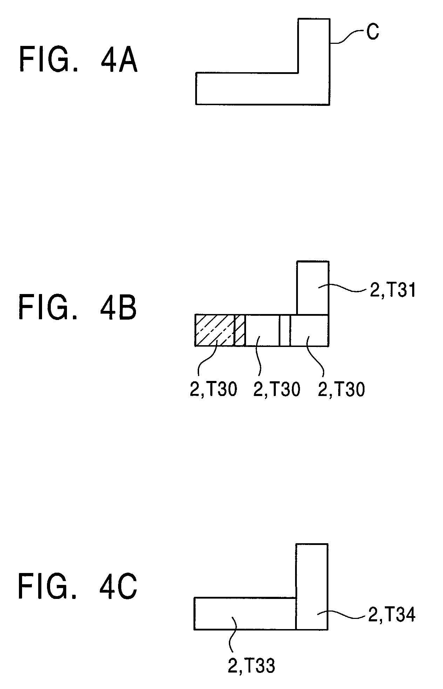

As shown in Figure 4A, when the shape of the processing portion (C) is irregular, as shown in the example shown in Figure 4B, the processing program converting means 8 carries out the tool distribution of which the same tool 2 (T30) is to be used for more than once. Moreover, as shown in Figure 4C, the processing program converting means 8 carries out the tool distribution to distribute one tool 2 (T33, T34) per each classification classifying the shape shown with the processing shape data to a simple shape.

As in the manner stated above, the processing command 11 converted into the actual processing program 10 from the multipurpose processing program 1 is carried out by the machine control means 9 and the processing machine 3 is controlled. In such case, the control device 5 carries out the control of the processing unit 3 while converting each processing shape data 4 of the multipurpose processing program 1 into the processing command 11 of the actual processing program 10 by the processing program converting means 8 accordingly. Since each processing shape data 4 is written in the processing order, the multipurpose processing program 1 is capable of processing while converting in such manner each processing portions (A∼C) in the appropriate processing order.

Likewise, the multipurpose processing program 1 is to be a processing program of high versatility, independent of the model of the processing machine 3. Therefore, the processing program can be used semi-permanently even when changing to any model of the processing machine 3. Moreover, according to the NC processing machine using such multipurpose processing program, the processing adopting such multipurpose processing program 1 and independent of the model of the processing machine 3 can be realized.

The multipurpose processing program of the present invention is a processing program for controlling the processing machine using tools of which the processing size and shape are determined. Moreover, since the processing standard position in the individual processing portion to be processed in the work, and the processing shape data which is the data including the shape and the size of the processing portion to be processed with the processing standard position as the standard, are arranged in the processing order of each processing portion, the multipurpose processing program of the present invention is to be of high versatility, independent of the model of the processing machine. Therefore, the processing program of the present invention can be used semi-permanently, even when the processing machine is changed to any model.

The NC processing machine using the multipurpose processing program of the present invention comprises the program inputting means for inputting the multipurpose processing program, the tool information storing means for storing by relating the data of the shape and the size to be processed by each tool provided in the processing machine and the tool code of the tools, the processing program converting means for converting the input multipurpose processing program into the actual processing program corresponded to the model of the processing machine, and the machine control means for controlling the position fixing mechanism and the tool selecting mechanism of the processing machine following the converted actual processing program. Moreover, the processing program converting means carries out the distribution of the tools in reference to each processing shape data of the multipurpose processing program based on the stored information of the tool information storing means, and includes the process to designate the tool code in the actual processing program. As a result, by using the multipurpose processing program of the present invention, the control of the processing machine can be realized.

In the case the processing program converting means makes the actual processing program by converting the processing standard position in the multipurpose processing program into the position fixing coordinates by the position fixing mechanism of the processing machine, the processing standard position can be converted into the position fixing coordinates corresponding to the processing machine and the control can be carried out easily also by the multipurpose processing program.

## Claims

1. A multipurpose processing program for controlling a processing machine using tool for processing designated shape and size, comprising, arranged in the processing order of each processing portion:
a processing standard position in individual processing portion to be processed on a work; and
a processing shape data which is a data including shape and size of the processing portion to be processed with the processing standard position as the standard.

2. NC processing machine using the multipurpose processing program according to claim 1 comprising:
a position fixing mechanism for fixing the position of the work relative to the tool;
a tool selecting mechanism for selecting the desired tool from a plurality of tools;
a program inputting means for inputting the multipurpose processing program;
a tool information storing means for storing the data of the shape and size to be processed by each tool provided in the processing machine corresponded to the tool code of the tool;
a processing program converting means for converting the input multipurpose processing program into the actual processing program corresponding to the model of the processing machine; and
a machine control means for controlling the position fixing mechanism and the tool selecting mechanism of the processing machine following the converted actual processing program;
wherein the processing program converting means distributes the tool for each processing shape data in the multipurpose processing program based on the stored data of the tool information storing means and includes a process for designating the tool code in the actual processing program.

3. NC processing machine using the multipurpose processing program according to claim 2 wherein the processing program converting means converts the processing standard position in the multipurpose processing program, into the position fixing coordinates of the position fixing mechanism of the processing machine, and forms the actual processing program.
